Europäisches Patentamt

(19) European Patent Office

Office européen des brevets

(11) **EP 1 328 819 B1**

(12) **EUROPEAN PATENT SPECIFICATION**

(45) Date of publication and mention
of the grant of the patent:
**28.12.2005 Bulletin 2005/52**

(51) Int Cl.[7]: **G01R 31/01**, G01R 31/12,
H01G 13/00, H01G 9/00

(21) Application number: **00960252.5**

(22) Date of filing: **19.09.2000**

(86) International application number:
**PCT/CA2000/001051**

(87) International publication number:
**WO 2002/025297 (28.03.2002 Gazette 2002/12)**

(54) **METHOD OF SELECTING ELECTROLYTES FOR HIGH CAPACITY ELECTRIC ENERGY ACCUMULATORS**

VERFAHREN ZUR AUSWAHL VON ELEKTROLYTEN FÜR ELEKTRISCHE AKKUMULATOREN VON HOHER KAPAZITÄT

PROCEDE DE SELECTION D'ELECTROLYTES POUR ACCUMULATEURS D'ENERGIE ELECTRIQUE DE FORTE CAPACITE

(84) Designated Contracting States:
**AT BE CH CY DE DK ES FI FR GB GR IE IT LI LU MC NL PT SE**

(43) Date of publication of application:
**23.07.2003 Bulletin 2003/30**

(73) Proprietor: **Select Molecular Technologies Corporation
Toronto, Ontario M4W 2E4 (CA)**

(72) Inventors:
• **BORISENKO, Nikolay N. DI
(RU)**
• **BORISENKO, Dmitry N.
Moscow, 119501 (RU)**

(74) Representative: **Jones, Graham Henry et al
Graham Jones & Company
77 Beaconsfield Road
Blackheath, London SE3 7LG (GB)**

(56) References cited:
**FR-A- 2 607 254**

• **DATABASE WPI Section Ch, Week 199535 Derwent Publications Ltd., London, GB; Class A85, AN 1995-269601 XP002174502 -& WO 95 20231 A (AMADEUS CO LTD), 27 July 1995 (1995-07-27)**
• **PATENT ABSTRACTS OF JAPAN vol. 1998, no. 14, 31 December 1998 (1998-12-31) -& JP 10 261551 A (NIPPON CHEMICON CORP), 29 September 1998 (1998-09-29)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention relates to a method of selecting electrolytes for high capacity electric energy accumulators.

## BACKGROUND OF THE INVENTION

Prior art double layer electrolytic capacitors (KDC) consist of a pair of metal electrodes, one of which is covered by a dielectric film (for example, the anode film formed as a result of the chemical effect on the surface of the electrode) that does not allow the passage of electrolyte to the metal surface. A membrane (as a rule, it is of a fibrous structure), saturated with the electrolyte, is usually placed between the electrode. Such membrane functions as the electrolyte carrier. The electrodes-metal and metal covered with the dielectric film are inert in relation to the electrolyte provided that the conditions of their work are preserved (polarity, voltage).

PCT international patent application publication No. WO95 20231 published on July 27, 1995 discloses a KDC capacitor device that uses a special kind of electrolyte and screw to regulate the compression of the element packet. D1 measures a final leakage current, each time at some definite value of charging voltage. This is suitable for KDC capacitors, but not suitable for a high capacity electric energy accumulator.

When a high capacity electric energy accumulator is used, such accumulator requires the development of a special method for choosing a suitable electrolyte.

## SUMMARY OF THE INVENTION

The present invention provides a method for selecting electrolytes based on the distinctiveness of high capacity electric energy accumulators from other traditional electrolytic capacitors of double layer (KDC) in light of differences of conditions of its work.

In accordance with an aspect of the present invention as defined in claim 1, there is provided a method for selecting an electrolyte for an electric energy accumulator having one or more cells divided by chemically inert conducting separators, each cell including electrodes having layers of chemically inert carbonised activated conducting fibrous material, the accumulator having a working voltage range. The method comprises the steps of providing an electrolyte to be tested in the accumulator; measuring a volt-ampere characteristic of the accumulator by conducting the measurement on short circuit current; determining. disintegration voltage at which the electrolyte starts to disintegrate; and selecting an electrolyte which has the disintegration voltage higher than the working voltage range of the accumulator.

In a preferred embodiment, the method further comprises the step of selecting the working range of the accumulator such that the working range does not exceed the disintegration voltage.

Other aspects and features of the present invention will be readily apparent to those skilled in the art from a review of the following detailed description of preferred embodiments in conjunction with the accompanying drawings.

## BRIEF DESCRIPTION OF THE DRAWINGS

The invention will be further understood from the following description with reference to the drawings in which:

Figure 1 is a diagram showing a fragment of a charged electrolytic KDC;
Figure 2 is a diagram showing a simplified model of a fragment of the charged EMONA elementary cell;
Figure 3 is a diagram showing an enlarged part of the simplified model of Figure 2; and
Figure 4 is graph showing a volt-ampere characteristic of EMONA.

## DETAILED DESCRIPTION OF THE PREFERRED EMBODIMENTS

The present invention is suitably used for a high capacity electric energy accumulator, such as a high capacitance accumulator (EMONA). The EMONA is a device, consisting of at least one, more often of several, cells, divided between themselves and from the current collectors by chemically inert conducting non-transparent for its electrolyte particle separators; each of such cells includes in itself a couple of electrodes consisting of one or several layers of chemically inert carbonised activated conducting fibrous material which has a developed surface, active centres and orderly structure; the electrode pair is divided within itself by a chemically inert non-conducting transparent for the electrolyte particles membrane. This device is enclosed in an air-tight body.

The electrolyte that is used is a liquid substance (clear liquid, liquid mixture, solution, gel, etc.) in which the electrodes and the chemically inert non-conducting transparent for the electrolyte particles membrane are saturated.

The electrolyte is usually found in the adsorbed form in the material of the electrodes and the membrane, while free volume of the electrolyte is absent.

The electrolyte is in direct contact with the chemically inert conducting surface of both electrodes.

Each cell of EMONA is originally symmetrical in relation to the chemically inert non-conducting transparent for the electrolyte particles membrane.

The use in the EMONA of the above described construction of the cell and materials requires the development of a special method for choosing the electrolyte. Processes leading to the charging of the device (accumulation of the electric energy) and processes for its use in the electric chains (output of the stored energy) are substantially different from the processes taking place in the traditional chemical sources of current in electric KDC with the metallic electrodes, despite the fact that they do not go beyond the laws of saving the charge and energy.

For comparison, fragments of charged capacitors are provided: that of the electric KDC with the metallic electrodes and that for EMONA.

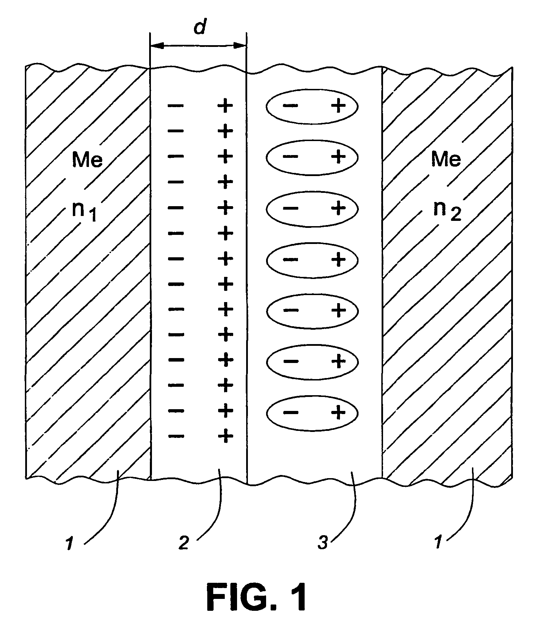

Figure 1 represents a fragment in which:

1 - the metallic electrodes (for example A1);
2 - the anode oxidizing layer - dielectric with the thickness d and dielectric constant E>2;
3 - porous membrane saturated with a dry electrolyte. Generally, the electrolyte is a highly viscous liquid containing polar molecules.

When charging the capacitor, the applied electric field influences the polar molecules of the electrolyte so as to orientate their polarization as it is shown on Figure 1. In turn, the oriented molecules of the electrolyte cause the induced polarization of the molecules of the hard dielectric. As a result, the creation of the polarized charges of the dielectric in the electrolyte lead to the redistribution of the concentration in the metal "electron gas": on the anode - $n_1$, on the cathode - $n_2$, provided that $n_2 > n_1$.

Therefore, the role of the electrolyte is limited to that of creating the polarized charges during the capacitor charging. The electro-capacity of the capacitor is defined only the thickness of the dielectric layer and its dielectric constant. The working voltage of the capacitor is in complete dependence from the qualities of the dielectric layer and the concentration of the conduction electrons, appearing in the inter-electrode space because of the "autoelectronic emission" of the electrons.

According to the Fermi-Dirak statistics, such electrons always are present when the temperature is T>0K. When the capacitor is charged, additional favourable conditions are created which allow the increase in their concentration (when the value of d voltage of the electric field near the internal borders of metal can reach $10^4$-$10^5$ V/cm, therefore the electrolytic metal capacitors have large "leakage currents".

When the voltage is increased, the dielectric breakdown takes place, at which time the electrolyte is decomposed and huge amounts of gas are emitted. These changes lead to the capacitor getting out of order. Such changes do not allow the use of such capacitors in the chain of alternating current, or at the polarity reversal.

Therefore, one can use as the working voltage, voltage during which no breakdown of the dielectric layer takes place.

When analysing the analogous fragment of the charged EMONA device, the available experimental results show absence of a certain polarity at the initial stage and the possibility of the polarity reversal after the charge; as a result of this, the possibility of using in the chain of alternate current. Furthermore, multiple experiments show that in the fibrous structures, under complicated conditions, many qualities of the liquids (broadcasting diffusion, viscosity, temperature of boiling and hardening, the coefficient of refraction and others) change considerably. The analysis of the structure of carbonised activated material by means of electronic microscopy, Auger spectroscopy, and others lead to the qualitative representation of its character: availability of two types of pores - micro-pores - size about (5-10) x$10^{-10}$m and macro-pores - size approximately 100x$10^{-10}$m and more; distribution according to the size is impossible to define. At the same time, the process of carbonisation, according to the generally accepted view, and graphitization of the materials possible at the so called sp2-hybridization of the carbon valence electrons. In other words, the energetic state of the valence electrons is changed.

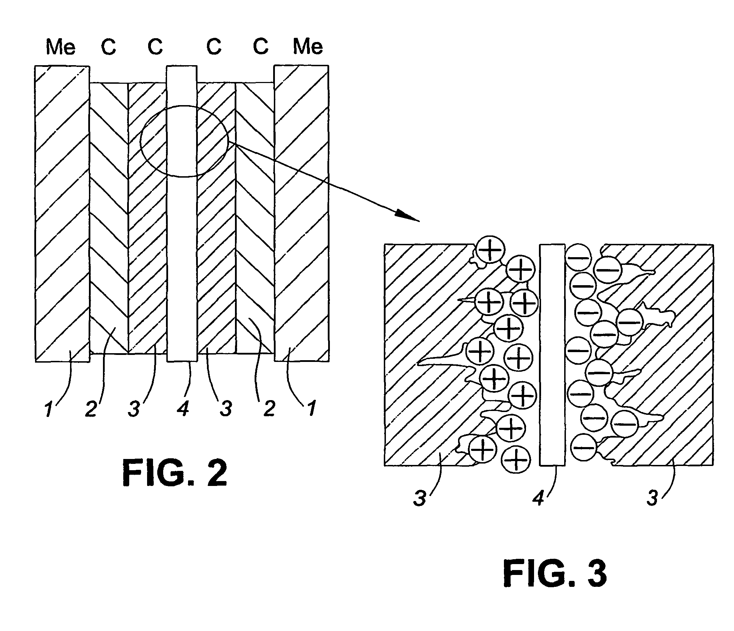

Figure 2 represents a fragment of the charged EMONA in the simplified version (ideal variant), when at the time of charging a complete separation of positive and negative charges took place (for simplification, the charges are represented without the accompanying hydrate and solvate shells). Figure 3 shows an enlarged fragment.

In Figures 2 and 3:

1 the current collectors (metal);
2 the inert conducting non-transparent for the electrolyte separators;
3 the electrodes made of the carbonised activated conducting fibrous material of orderly structure; and
4 the non conducing transparent for the electrolyte membrane.

Since the "electronic gas" is absent in the carbon graphitized structures, such picture is possible only provided that the redistribution (deformation) of the electronic density of the surface or the transformation of the energetic condition of the carbon valence electrons. This phenomena reminds of the electronic polarization in the non-polar dielectrics. However, the graphitized carbon structures act as transmitting media and, therefore, it is possible to assume the availability of an "exchange" mechanism of their conductance.

In any case, the changes in the electron density of the carbon surface must be compensated by the change in the concentration of the "electron gas" in the metallic current collectors, that is, similar to the metallic electrodes in the electrolytic KDC, they must contain both $n_1$ (similar to the anode) and $n_2$ (similar to the cathode), and $n_2 > n_1$.

This picture allows explanation of all phenomena observed during the use of a device in the chain of constant and alternative current. Therefore, in this situation the role of the electrolyte is different from that in the case of the electrolytic KDC.

During the charge, a double electric layer is formatted immediately on the surface of the electrode, and it certain structuralization takes place. At the same time the structure that is deeper in its layer, simultaneously with the formation of the charge, creates a certain screening shield of the charges, located immediately at the surface of the material. From this picture it is possible to define the conditions necessary for the successful work of the capacitor. Since the redistribution of the charges takes place under the influence of the electric field, the maximum possible voltage will be such that it does not allow the charges' discharge at the surface of the material. When the voltage is higher than allowed, the charges at the surface will be discharged, and this will result in their neutralization. Since the charges closest to the surface start discharging first of all, once having discharged, they would decrease the area of the layer (partially screened shielded from further located charged layers). If one studying the characteristics of the capacitor at this stage, at these and higher levels of voltage, these characteristics would have to change. Our experience indicates that such changes do not reflect considerably on the capacity, yet the current of short circuit changes more drastically.

It does not seem possible to define the voltage corresponding to the beginning of the electrolyte disintegration (the discharge of the charged particles at the surface of the electrode). For example, when the gas-forming carriers of the charge are discharged, the gas may be formed, or not, depending on the surface density of such charges in the layer closest to the porous carbon surface based on the above described.

The above-noted reveals how the method of choosing the electrolyte and its working voltage for EMONA is defined.

This method involves (a) taking measurements; (b) received data analysis; and (c) choosing the range of the working voltages.

(a) Taking Measurements

The volt-ampere characteristics of the elementary EMONA cells are measured with the electrolyte being tested on the short circuit current: $I_{sc}=f(U)$.

Every time EMONA is charged to a certain voltage value $U_i$ (generally, starting from 0 volt with a certain step, provided that $U_i > U_i$-1. When the value of the charging coefficient is identical, for example, $K_{ch}$=1.03, it represents the correlation between the voltage on EMONA at charging and the voltage remaining on EMONA after its disconnection from the charging device.

The current of the short circuit is defined in the EMONA, charged this way and when disconnected from the charging device, for example with the help of the Oscillograph and the calibrated shunt.

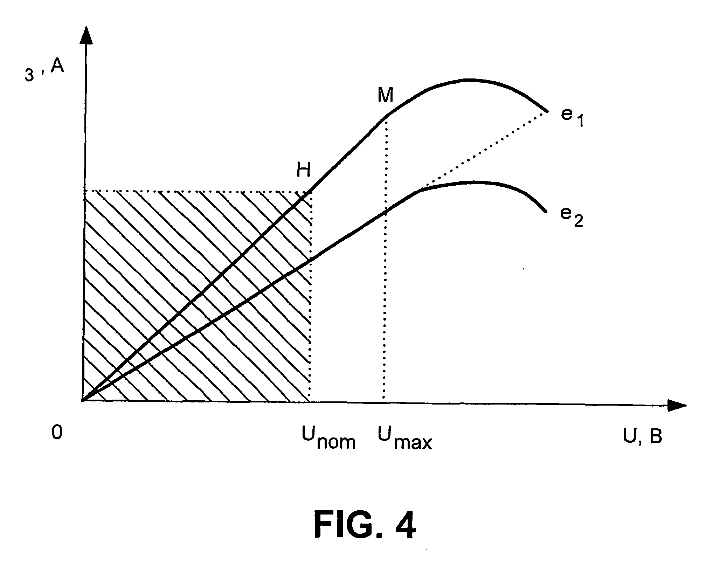

The volt-ampere characteristic received in this way looks similar for any kind of electrolyte, and is reflected on Figure 4 3 (curve O-e$_1$).

Particularly, the characteristic received for 1 N water solution of the sulphuric acid revealed disintegration voltage of 1.6-1.7 volt, which coincides with the well-known for the disintegration voltage of such an electrolyte 1.67 volt.

(b) Received Data Analysis

From the analysis of the volt-ampere characteristic, one defines the point from which the angle of the curve starts to decrease, that is

$$\frac{d}{du}\left(\frac{dI}{dU}\right)$$

changes its mark to the negative (.m on Figure 4). Voltage corresponding to the found point will indicate the voltage corresponding to the beginning of the electrolyte disintegration.

At the same time

$$\frac{dU}{dI}$$

is increasing. This can be called the internal resistance. With further increase in the internal resistance voltage, the short circuit current reaches its maximum and starts to decrease.

Such increase and the internal resistance growth is irreversible. If one had to measure, after the discharge, this characteristic (curve O-e$_2$) at its initial point, it would correspond to the highest internal resistance of the previous cycle coincides with curve O-e$_1$. The polarity of the first and the following charge-discharge cycle does not influence the voltage corresponding at the beginning of the characteristic bending.

(c) Choosing the Range of the Working Voltages

The disintegration voltage found this way will represent the maximum possible voltage for such an electrolyte in the conditions of EMONA, $U_{max}$. When EMONA is used, this electrolyte is fit to work at the level of charge voltage not higher than $U_{max}$ irrespective of the polarity.

In order to increase the reliability of the electrolyte work within EMONA, the nominal working voltage $U_{nom}$ may be used, which is a voltage that is a little bit lower than the maximum voltage allowed. One would include the coefficient of supply $K_u$ (usually 1.2-1.4), that is $U_{nom} = U_{max}/K_u$.

Therefore, the working voltage $U_{work}$ for this electrolyte can be any voltage value of which does not exceed $U_{nom}$ (section of the characteristic 0-$_N$ on Figure 4). The working voltage selected this way must provide the guaranteed device power.

During the work within the parameters of this range (a shaded part of Figure 4) one would provide stable parameters of EMONA and theoretically unlimited number of large discharge cycles, as well as the longevity of work, including, when plugging into the chain of pulsating or alternating current (one should remember that EMONA, as other traditional capacitors, is charged to the peak value of voltage).

The selection of an electrolyte for an EMONA is based on the definition of the working capacity of a certain electrolyte in the conditions of EMONA on the basis of analysing the received volt-ampere characteristic.

First, the volt-ampere characteristic of the EMONA sample is measured with the electrolyte being tested. The point on the characteristic is defined which corresponds to the voltage at the time of exceeding which

$$\frac{d}{dU}\left(\frac{dI}{dU}\right)$$

becomes less than 0.

Voltage corresponding to the point found above is considered the maximum allowed for such an electrolyte within the conditions of EMONA.

The measurements of the volt-ampere characteristic are conducted on an elementary cell. They are conducted on the short circuit current. The characteristic is measured beginning with 0V, with a certain step, to the voltage where each following voltage is higher than the previous one.

As a nominal voltage, voltage slightly less than that the maximum voltage is determined. The coefficient of storage is considered for the voltage $K_u = U_{max}/U_{nom}$.

The working voltage applied to one EMONA cell does not exceed the maximum voltage or the nominal voltage.

The present invention as described above may define the allowed working regimes for any device which work according to the principles similar to those in EMONA.

Also, the present invention may define the discharge voltage for any liquid substance (pure liquid, solution, melt, condensate, get, ash and their mixtures).

While particular embodiments of the present invention have been shown and described, changes and modifications may be made to such embodiments without departing from the true scope of the invention.

**Claims**

1. A method of selecting an electrolyte for a an electric energy accumulator having one or more cells divided by chemically inert, conducting, non transparent for its electrolyte, particle separators, each cell including electrodes having one or several layers of chemically inert carbonised activated conducting fibrous material, the accumulator having a working voltage range, the method comprising steps of:

    providing an electrolyte to be tested in the accumulator;
    measuring a volt-ampere characteristic of the accumulator by conducting the measurement on short circuit current;
    determining disintegration voltage at which the electrolyte starts to disintegrate; and
    selecting an electrolyte which has the disintegration voltage higher than the working voltage range of the accumulator.

2. The method as claimed in claim 1 further comprising the step of:

    selecting the working range of the accumulator such that the working range does not exceed the disintegration voltage.

3. The method as claimed in claim 1 or claim 2, wherein the determining step comprises a step of finding the disintegration voltage as a point of a curve defined by the volt-ampere characteristic at which the angle of the curve starts to decrease.

4. The method as claimed in claim 1 or claim 2, wherein the step of providing an electrolyte comprises a step of providing one or more elementary cells, each having a pair of electrodes having a layer of chemically inert conducting layer, and the pair of the electrodes being separated by a chemically inert non-conductive membrane which is transparent for the electrolyte.

5. The method as claimed in claim 1 or claim 2, wherein the measuring step comprises a step of conducting the measurement on an elementary cell of the accumulator.

6. The method as claimed in claim 1 or claim 2, wherein the measuring step comprises a step of conducting the measurement beginning with 0V to a voltage where each following voltage is higher than the previous one.

7. The method as claimed in claim 6, wherein the conducting step comprises a step of incrementing the voltage at a predetermined step.

8. The method as claimed in claim 1 or claim 2, wherein the determining step determines the disintegration voltage as a maximum voltage for the electrolyte in the accumulator.

9. The method as claimed in claim 8 further comprises a step of determining a nominal voltage based on the maximum voltage multiplied by a supply coefficient of the accumulator.

10. The method as claimed in claim 9, wherein the selecting step comprises a step of selecting an electrolyte which has the disintegration voltage higher than the nominal voltage range of the accumulator.

11. The method as claimed in claim 1 or claim 2, wherein the method further comprises a step of defining the discharge voltage for a liquid substance.

## Patentansprüche

1. Verfahren zum Auswählen eines Elektrolyts für einen Akkumulator für elektrische Energie, der eine oder mehrere Zellen aufweist, die durch chemisch inerte, leitende, für sein Elektrolyt undurchlässige Teilchenseparatoren unterteilt sind, wobei jede Zelle Elektroden enthält, die eine oder mehrere Schichten aus einem chemisch inerten karbonisierten aktivierten leitenden Fasermaterial aufweisen, wobei der Akkumulator einen Arbeitsspannungsbereich aufweist, wobei das Verfahren die Schritte aufweist:

> Bereitstellen eines Elektrolyts, das im Akkumulator geprüft werden soll;
> Messen einer Volt-Ampere-Kennlinie des Akkumulators durch Durchführen der Messung des Kurzschlußstroms;
> Bestimmen der Zersetzungsspannung, bei der das Elektrolyt beginnt sich zu zersetzen; und
> Auswählen eines Elektrolyts, das die Zersetzungsspannung aufweist, die höher als der Arbeitsspannungsbereich des Akkumulators ist.

2. Verfahren nach Anspruch 1, das ferner den Schritt des Auswählens der Arbeitsbereichs des Akkumulators aufweist, so daß der Arbeitsbereich die Zersetzungsspannung nicht überschreitet.

3. Verfahren nach Anspruch 1 oder 2, wobei der Bestimmungsschritt einen Schritt des Feststellens der Zersetzungsspannung als einen Punkt einer Kurve aufweist, die durch die Volt-Ampere-Kennlinie definiert ist, bei dem der Winkel der Kurve beginnt abzunehmen.

4. Verfahren nach Anspruch 1 oder 2, wobei der Schritt des Bereitstellens eines Elektrolyts einen Schritt des Bereitstellens einer oder mehrerer Elementarzellen aufweist, von denen jede ein Paar Elektroden aufweist, die eine Schicht einer chemisch inerten leitenden Schicht aufweisen, und wobei das Paar der Elektroden durch eine chemisch inerte, nicht leitfähige Membran getrennt ist, die für das Elektrolyt durchlässig ist.

5. Verfahren nach Anspruch 1 oder 2, wobei der Meßschritt einen Schritt der Durchführung der Messung an einer Elementarzelle des Akkumulators aufweist.

6. Verfahren nach Anspruch 1 oder 2, wobei der Meßschritt einen Schritt des Durchführens der Messung beginnend mit 0 V bis zu einer Spannung aufweist, wo jede folgende Spannung höher als die vorhergehende ist.

7. Verfahren nach Anspruch 6, wobei der Durchführungsschritt einen Schritt der Erhöhung der Spannung mit einem vorbestimmten Schritt aufweist.

8. Verfahren nach Anspruch 1 oder 2, wobei der Bestimmungsschritt die Zersetzungsspannung als eine Maximalspannung für das Elektrolyt im Akkumulator bestimmt.

9. Verfahren nach Anspruch 8, das ferner einen Schritt des Bestimmens einer Nennspannung beruhend auf der Maximalspannung multipliziert mit einem Speisekoeffizienten des Akkumulators aufweist.

10. Verfahren nach Anspruch 9, wobei der Auswahlschritt einen Schritt des Auswählens eines Elektrolyts aufweist, das die Zersetzungsspannung aufweist, die höher als der Nennspannungsbereich des Akkumulators ist.

11. Verfahren nach Anspruch 1 oder 2, wobei das Verfahren ferner einen Schritt des Definierens der Entladespannung für eine flüssige Substanz aufweist.

## Revendications

1. Procédé de sélection d'un électrolyte pour un accumulateur d'énergie électrique ayant une ou plusieurs cellules divisées par des séparateurs de particules non transparents pour son électrolyte, conducteurs, chimiquement inertes, chaque cellule comprenant des électrodes ayant une ou plusieurs couches de matière fibreuse conductrice, à base de carbone, activée chimiquement inerte, l'accumulateur ayant une plage de tension de travail, le procédé comprenant les étapes consistant à :

> prévoir un électrolyte à tester dans l'accumulateur,
> mesurer une caractéristique volt - ampère de l'accumulateur en réalisant la mesure sur le courant de court-circuit,
> déterminer la tension de désintégration à laquelle l'électrolyte commence à se désintégrer, et

sélectionner un électrolyte dont la tension de désintégration est plus élevée que la plage de tension de travail de l'accumulateur.

2. Procédé comme revendiquée dans la revendication 1 comprenant l'étape consistant à :

sélectionner la plage de travail de l'accumulateur de telle manière que la plage de travail ne dépasse pas la tension de désintégration.

3. Procédé comme revendiquée dans la revendication 1 ou dans la revendication 2, dans lequel l'étape de détermination comprend une étape consistant à trouver la tension de désintégration comme un point d'une courbe définie par la caractéristique volt - ampère auquel l'angle de la courbe commence à diminuer.

4. Procédé comme revendiquée dans la revendication 1 ou dans la revendication 2, dans lequel l'étape consistant à prévoir un électrolyte comprend une étape consistant à prévoir une ou plusieurs cellules élémentaires, chacune ayant une paire d'électrodes ayant une couche de matière conductrice, chimiquement inerte, et la paire d'électrodes étant séparées par une membrane non conductrice, chimiquement inerte, qui est transparente pour l'électrolyte.

5. Procédé comme revendiquée dans la revendication 1 ou dans la revendication 2, dans lequel l'étape de réalisation de la mesure comprend une étape consistant à effectuer la mesure sur une cellule élémentaire de l'accumulateur.

6. Procédé comme revendiquée dans la revendication 1 ou dans la revendication 2, dans lequel l'étape de réalisation de la mesure comprend une étape consistant à réaliser la mesure en commençant à 0V jusqu'à une tension où chaque tension suivante est plus élevée que la précédente.

7. Procédé comme revendiqué dans la revendication 6, dans lequel l'étape de réalisation de la mesure comprend une étape consistant à augmenter la tension selon un pas prédéterminé.

8. Procédé comme revendiquée dans la revendication 1 ou dans la revendication 2, dans lequel l'étape de détermination détermine la tension de désintégration comme une tension maximale pour l'électrolyte dans l'accumulateur.

9. Procédé comme revendiqué dans la revendication 8 comprenant en outre une étape consistant à déterminer une tension nominale sur la base de la tension maximale multipliée par un coefficient d'alimentation de l'accumulateur.

10. Procédé comme revendiqué dans la revendication 9, dans lequel l'étape de sélection comprend une étape consistant à sélectionner un électrolyte dont la tension de désintégration est plus élevée que la plage de tension nominale de l'accumulateur.

11. Procédé comme revendiquée dans la revendication 1 ou dans la revendication 2, dans lequel le procédé comprend en outre une étape consistant à définir la tension de décharge pour une substance liquide.

**FIG. 1**

Me C C C C Me

1 2 3 4 3 2 1

**FIG. 2**

3 4 3

**FIG. 3**

FIG. 4